# EUROPÄISCHE PATENTSCHRIFT

(11) **EP 0 263 791 B1**
(45) Veröffentlichungstag und Bekanntmachung des Hinweises auf die Patenterteilung: **09.11.1994**
(21) Anmeldenummer: 87810570.9
(22) Anmeldetag: 05.10.1987
(51) Int. Cl.: C09B 67/54, B01D 61/00

(54) **Abtrennung und Reinigung von Pigmentsuspensionen und Pigmentzwischenproduktsuspensionen mit Hilfe der Membrantechnik**
Separation and purification of pigment and pigment intermediate suspensions using a membrane technique
Séparation et purification de suspensions de pigment et de produit intermédiaire pour pigment à l'aide d'une technique de membrane

(30) Priorität: 10.10.1986 CH 4062/86
(43) Veröffentlichungstag der Anmeldung: 13.04.1988
(73) Patentinhaber: CIBA-GEIGY AG, 4002 Basel (CH)
(72) Erfinder: Flierl, Klaus, Dr., CH-4059 Basel (CH); Pfenninger, Heinz, Dr., CH-4419 Lupsingen (CH); Marfurt, Hans-Rudolf, Dr., CH-4310 Rheinfelden (CH)

(56) Entgegenhaltungen:
- EP-A- 0 063 321
- EP-A- 0 184 993
- EP-A- 0 197 006
- US-A- 4 069 157
- US-A- 4 579 949
- CHEMIE-TECHNIK, DR. A. HÜTHIG VERLAG GMBH, HEIDELBERG no. 8, 1978, 7. JAHRGANG Seiten 333 - 347; VON H. STRATHMANN: "ANWENDUNG VON MEMBRANPROZESSEN ZUR TRENNUNG MOLECULARER GEMISCHE"

## Beschreibung

Die vorliegende Erfindung betrifft ein Verfahren zur Abtrennung und Reinigung von Pigmentsuspensionen und Pigmentzwischenproduktsuspensionen mit Hilfe der Membrantechnik.

Die Filtration von Pigmentsuspensionen, insbesondere in Form feiner Partikel, ist oft problematisch. Wenn überhaupt möglich, lassen sich derartige Pigmentsuspensionen mit Hilfe konventioneller Filtrationseinrichtungen, wie vakuumtrommelfilter, Separatoren oder Filterpressen, grosstechnisch nicht befriedigend aufarbeiten. Lange Filtrations- und Waschzeiten sind notwendig; oft werden aufgrund unvollständigen Auswaschens Produkte ungenügender chemischer Reinheit erhalten. Ferner sind die so isolierten Pigmente in Bezug auf ihre Produkteeigenschaften insbesondere wegen Agglomerierung der Pigmentpartikel oft so beschädigt, dass sie in dieser Form aufgund ungenügender Dispergierbarkeit und/oder koloristischer Eigenschaften nicht zum direkten Einfärben hochmolekularer organischer Materialien verwendet werden können. Ausserdem lässt die Reproduzierbarkeit bei Verwendung derartiger Filtrationseinrichtungen für die Aufarbeitung feiner Pigmentsuspensionen meistens zu wünschen übrig. Zudem sind konventionelle Filteranlagen mit Lösungsmittelverlusten verbunden.

Zur Aufarbeitung verschiedenartiger Stoffsuspensionen in Flüssigkeiten wurde bereits vorgeschlagen, die Membrantrenntechnik anzuwenden, wie es beispielsweise in den Uebersichtsreferaten "Farbe und Lack 90, 5/1984, S. 372-374" und "Chem.-Ing.-Tech. 53 (1981), Nr. 4, S. 227-236" beschrieben ist. Dabei werden zur Trennung des Filtrates (oft Permeat genannt) vom suspendierten Stoff semipermeable Schichten in Form von Membranen eingesetzt, wobei die semipermeable Membran für die Flüssigkeit, wie z.B. Wasser, durchlässig ist, während die darin ungelösten Substanzen von ihr zurückgehalten werden.

Die EP-A-184 993 beschreibt ein Verfahren zur Herstellung von Azofarbstoffpräparaten, worin die anschliessende Reinigung und Aufkonzentrierung der Synthesedispersion in einem Membrantrennverfahren aus mindestens zwei hintereinandergeschalteten Trennoperationen, die hinsichtlich der verwendeten Membran dem Dispersitätsgrad der Synthesedispersion angepasst sind, erfolgt.

Es wurde nun gefunden, dass sich das Membrantrennverfahren zur Abtrennung und Reinigung von Pigmentsuspensionen, insbesondere von schwer filtrierbaren feinen Suspensionen, sowie Pigmentzwischenproduktsuspensionen, besonders gut eignet, wenn man das Permeat durch eine von der ersten Flüssigkeit verschiedene Waschflüssigkeit ersetzt, so dass dabei die Verunreinigungen, wie unreagierte Ausgangsstoffe, Nebenprodukte oder anorganische Salze, herausgewaschen werden können und die so erhaltene Suspension dann direkt oder nach weiterer Aufkonzentrierung mit konventionellen Filtrationsapparaturen problemlos abfiltriert werden kann.

Die vorliegende Erfindung betrifft demnach ein Trenn- und Reinigungsverfahren für Pigmentsuspensionen und Pigmentzwischenproduktsuspensionen in einer Flüssigkeit mit Hilfe der Membrantechnik, wobei die Suspension gleichmässig und im Kreislauf in eine mindestens eine semipermeable Membran aufweisende Mikrofiltrationseinrichtung im Kreislauf eindosiert und die Flüssigkeit durch die Membran als Permeat ausgeschieden werden, dadurch gekennzeichnet, dass man die wegfliessende Permeatmenge allmählich in der Weise durch eine von der ersten Flüssigkeit verschiedene Waschflüssigkeit ersetzt, dass die Gesamtmenge der zudosierten Waschflüssigkeit das 1- bis 15-Fache des Gesamtvolumens der Anfangssuspension beträgt, und dass man anschliessend die so erhaltene Suspension mit Hilfe konventioneller Filtrations - oder Trockeneinrichtungen von der Flüssigkeit abtrennt.

Als Membranen eignen sich mikroporöse Membranen, deren Mikroporen fein genug sind, um die abzutrennenden Stoffteilchen zurückzuhalten, dagegen aber die Anfangs- und Waschflüssigkeiten sowie die darin gelösten Substanzen bei geringstem Widerstand durchströmen zu lassen.

Die Porengrösse der Membran kann zweckmässig auf die Molekülgrösse und -struktur der abzuscheidenden Stoffe ausgerichtet werden, wobei die Poren beispielsweise zylindrisch, konisch oder von unregelmässiger Form sein können. Erfindungsgemäss geeignete Membranen weisen beispielsweise Porengrössen von 0,1 bis 5 Mikron (µ), bevorzugt aber von 1 µ bis 2 µ, auf.

Am besten geeignet sind Membranen, die temperaturbeständig sind, beispielsweise bis zu 200°C, die gegen extreme pH-Werte, wie in Laugen und Säuren sowie gegen organische Lösungsmittel, beständig sind bzw. darin nicht quellen, und die eine gute mechanische Festigkeit aufweisen.

Beispiele von geeigneten Membranen sind solche aus hochmolekularem organischem Material, wie Teflon®, besonders aber aus anorganischen Stoffen, wie poröser Keramik, gesinterten Metallen, wie Eisen, porösem Graphit und porösem Graphit mit Zirkonoxid- oder Aluminiumoxid-Beschichtung.

Die Membranen können verschiedene Formen aufweisen, z.B. plattenförmig oder röhrenförmig.

Die erfindungsgemäss in Frage kommenden Membranen sind beispielsweise Flachmembranen mit Turbulenz verursachenden Einrichtungen, beispielsweise überströmte, mit Flachmembranen versehene Membransysteme, insbesondere aber in entsprechende Systeme integrierte Membranen, wie Filtermodule bestehend aus einem Metall- oder Kunststoffmantelrohr, das eine mikroporöse Membran enthält, wie Einrohr- oder Mehrrohrfiltermodule. Je nach Porengrösse, Porenform und Dimensionen des Moduls können bei einem Filtrationsdruck von 1 bis 10 bar Durchflussleistungen von beispielsweise 50-5000, vorzugsweise 45 bis 450, Liter Suspension pro Stunde und m² erzielt werden.

Erfindungsgemäss geeignete handelsübliche Membraneinrichtungen sind beispielsweise keramische Membranen der Firma CERAVER (Frankreich) oder der Firma NORTON (England), Graphitmembranen mit Zirkonbeschichtung der Firma SFEC (Frankeich), metallische Membranen der Firma MOTT (USA) und organische Membranen aus Teflon der Firma PUROLATOR (Deutschland).

Das erfindungsgemässe Verfahren kann bei hohen Temperaturen, beispielsweise bei Temperaturen bis 200°C, zweckmässig aber bei Temperaturen zwischen 20° und 100°C, und unter Druck durchgeführt werden. Auch die Filtriergeschwindigkeit kann beliebig variiert und verändert werden.

Die Verfahrensparameter, wie Ueberströmgeschwindigkeit, Druck, Temperatur und Wahl der Membran, insbesondere bezüglich Porengrösse, sind zweckmässig so zu wählen, dass das Abtrennen der Flüssgkeit und Auswaschen der Suspension bei hoher Permeatleistungen und einwandfreier Trennqualität optimal ablaufen.

Bevorzugt werden Mehrrohrfiltermodule eingesetzt.

Die Menge der dem Permeat zuzusetzenden Waschflüssigkeit muss das 1-bis 15-Fache des Gesamtvolumens der Anfangssuspension betragen, ist aber in der Regel nicht kritisch; sie kann volumenmässig ein Mehrfaches, Gleiches oder ein Bruchteil der wegfliessenden Permeatmenge betragen und sollte ausreichend sein, um alle Verunreinigungen bzw. Nebenprodukte bis auf die erforderliche Toleranzmenge herauszuwaschen.

Das erfindungsgemässe Verfahren kann auch so ausgeführt werden, dass ein sägezahnartiges (Variation der Waschflüssigkeitsmenge in Funktion der Zeit) Auswaschen erfolgt. Dabei kann die Pigmentsuspension beispielsweise zuerst aufkonzentriert, dann mit Waschflüssigkeit verdünnt und anschliessend wiederum aufkonzentriert werden.

Das erfindungsgemässe Verfahren wird bevorzugt so ausgeführt, dass die einzudosierende Menge der Waschflüssigkeit volumenmässig annähernd gleich ist wie die wegfliessende Permeatmenge, und das 1- bis 5-Fache des Gesamtvolumens der Anfangssuspension beträgt.

Es kann zweckmässig sein, das Permeat in bestimmten Zeitabständen pulsartig, beispielsweise von einer Minute bis zu 2 Stunden Periodendauer und mit einer Pulsdauer von 1 bis 10 Sek., in entgegengesetzter Filtrations- und Waschrichtung durch die Membran zu drücken, so dass allfällige, in die Membran eingedrungene Stoffpartikel herausgespült werden können.

Für das erfindungsgemässe Verfahren eingen sich Suspensionen organischer oder anorganischer Pigmente sowie Suspensionen von Pigmentzwischenprodukten in Flüssigkeiten, insbesondere in der Form feiner Suspensionen, so wie sie bei ihrer Synthese oft anfallen. Als Flüssigkeiten versteht man irgendwelche bei der Synthese von Pigmenten sowie deren Zwischenprodukten üblicherweise verwendete organische Lösungsmittel oder Lösungsmittelgemische. Beispiele hierfür sind primäre, sekundäre oder tertiäre Alkohole, wie Methanol, Aethanol, n-Butanol, n-Propanol, Isopropanol, sek.-Butanol, tert.-Butanol und 2-Methyl-2-pentanol, Glykole, wie Aethylenglykol oder Diäthylenglykol, wie Aethylenglykol-mono- oder -di-methyläther oder -äthyläther, Diäthylenglykol-mono- oder -di-methyläther oder Diäthylenglykol-mono- oder -di-methyl- oder -di-äthyläther, ferner dipolar-aprotische Lösungsmittel, wie Acetonitril, Benzonitril, Dimethylformamid, N,N-Dimethylacetamid, Nitrobenzol oder N-Methylpyrrolidon, aliphatische oder aromatische Kohlenwasserstoffe, wie Benzol oder durch Alkyl, Alkoxy oder Halogen substituiertes Benzol, wie Toluol, Xylole, Anisol, Chlorbenzol, Dichlor- oder Trichlorbenzole, oder aromatische N-Heterocyclen, wie Pyridin, Picolin oder Chinolin. Als weitere Flüssigkeit kommt auch Wasser in Frage.

Als anorganische Pigmente kommen beispielsweise in Betracht: Chromatpigmente, wie Bleichromat- oder Bleichromatsulfatpigmente, oder Molybdatorange. Als organische Pigmente kommen beispielsweise Mono- und Disazo-, Methin-, Azomethin-, Phthalocyanin-, Anthrachinon-, Perinon-, Perylentetracarbonsäurederivat-, Dioxazin-, Thioindigo-, Iminoisoindolin-, Iminoisoindolinon-, Chinophthalon-, Chinacridon-, Pyrrolopyrrol- oder Metallkomplexpigmente, beispielsweise von Methin- oder Azomethinfarbstoffen, ferner Metallsalze von Azofarbstoffen in Frage.

Als Waschflüssigkeiten können an sich beliebige Lösungsmittel oder Lösungsmittelgemische verwendet werden, zweckmässig aber solche, in welchen das erfindungsgemäss zu behandelnde Pigment oder dessen Zwischenprodukt praktisch unlöslich sind. Als Waschflüssigkeiten kommen demnach grundsätzlich alle bereites oben angegebenen Lösungsmittel in Frage, wobei aber die Auswahl dieser Flüssigkeit stark von der Pigmentstruktur abhängt. Am besten geeignet sind Flüssigkeiten, in denen das Pigment oder dessen Zwischenprodukte praktisch unlöslich, die erfindungsgemäss auszuwaschenden Verunreingungen oder Nebenprodukte hingegen löslich sind.

Es kann sich als zweckmässig erweisen, den Waschvorgang ein oder mehrere Male zu wiederholen, indem man die erste Waschflüssigkeit allmählich durch eine weitere davon verschiedene Waschflüssigkeit ersetzt, zweckmässig derart, dass die einzudosierende weitere Waschflüssigkeit volumenmässig das 1- bis 15-Fache, insbesondere das 1- bis 5-Fache der ersten Waschflüssigkeit beträgt. Als weitere Waschflüssigkeiten eignen sich Lösungsmittel und Lösungsmittelgemische der oben genannten Art. Gegebenenfalls kann die nach dem Waschvorgang erhaltene Suspension vor dem Abfiltrieren bzw. Trocknen aufkonzentriert werden.

Besonders geeignet ist das erfindungsgemässe Verfahren zum Abtrennen und Auswaschen von feinen, bei der Herstellung von Azo-, Azomethin-, Iminoisoindolinon-, Iminoisoindolin-, Pyrrolopyrrol- und Metallkomplexpigmenten ausfallenden Pigmentsuspensionen sowie von Pigmentzwischenproduktsuspensionen in Chlorbenzol, o-Dichlorbenzol, Nitrobenzol, Toluol, Xylolen oder Alkoholen.

Im Vergleich zu konventionellen Filtrationseinrichtungen bietet das erfindungsgemässe Verfahren mehrere Vorteile, wie keine Porenverstopfung, einwandfreies Auswaschen und keine Lösungsmittelverluste, hohe Wirtschaftlichkeit, insbesondere hinsichtlich der benötigten Zeit und des Abtrennvorganges, sowie hohe Produktequalität und gute Reproduzierbarkeit. Ausserdem ist das Verfahren ökologisch und toxikologisch unbedenklich.

Als Beispiel einer erfindungsgemäss geeigneten Membranfiltrationsanlage sei die folgende Einrichtung dargestellt.

Die zu filtrierende Suspension wird aus einem üblichen Vorratsbehälter im Kreislauf gleichmässig durch ein Filtermodul, enthaltend das Membranrohr bzw. die Membranrohre, gepumpt, wobei die wegfliessende Permeatmenge durch eine entsprechende, sich beispielsweise in einem zweiten Vorratsbehälter befindliche Menge Waschflüssigkeit ersetzt wird. Dabei wird die Permeatmenge separat eingesammelt und die aus dem Filtermodul wegfliessende Suspension erfindungsgemäss im Kreislauf weiterbehandelt. Dabei kann der periodische Rückspülimpuls zweckmässig durch eine einstellbare Timer-Einrichtung ausgelöst werden. Anschliessend kann die erhaltene Pigmentsuspension, gegebenenfalls nach weiterer Aufkonzentrierung, mit einer konventionellen Filtrationseinrichtung, wie Filterpresse, abfiltriert oder direkt einer Trockenvorrichtung zugeführt werden. Das Filtrat wird zweckmässig noch mit Wasser gewaschen und wie üblich getrocknet.

Die erfindungsgemäss behandelten Pigmente können zum Einfärben von hochmolekularem organischem Material, wie Lacken, Anstrichstoffen, Druckfarben, Spinnfasern oder Kunststoffen, telquel verwendet werden. Sie eignen sich aber auch hervorragend zur Herstellung von sogenannten Masterbatches, beispielsweise unter gleichzeitiger Herabsetzung des Farbkörpergehalts mittels Innenknetern oder kontinuierlicher Knetmaschinen wobei auch Nuancenmischungen hergestellt werden können.

In den nachfolgenden Beispielen bedeuten die Teile Gewichtsteile.

Beispiel 1: 5 Liter einer 7 gew.%igen wässrig-alkalischen Synthese-Suspension des Pyrrolopyrrol-Pigments (∼350 g Pigment), das gemäss Beispiel 6 der US-Patentschrift Nr. 4579949 mit anschliessender Wasserdampfdestillation zur Austreibung des tert.-Amylalkohols erhalten wurde, werden aus einem üblichen Vorratsbehälter im Kreislauf kontinuierlich durch eine Mikrofiltrationseinrichtung enthaltend eine semipermeable Membran gepumpt und mit 20 Litern Methanol wie folgt ausgewaschen:
Die Filtrationsmembran besteht aus 3 mit Zirkonoxid ausgekleideten Graphitröhren von 6 mm Durchmesser und 45 cm Länge (Hersteller SFEC). Der Trennschnitt dieser Membrane liegt bei einem Molekulargewicht von 40ʹ000. Bei einem mittleren Membrandruck von 2,5 bar, einer Eindosierungsrate von 1400 l/Stunde und einer Betriebstemperatur von 50°C werden Anfangsdurchflusswerte von 65 l/m²·Std. erreicht. Die hiezu erforderliche Pumpleistung wird mit einer Membranpumpe erbracht. Der Auswaschvorgang ist so zu bemessen, dass die zugegebene Methanolmenge volumenmässig gleich gross ist wie die wegfliessende Permeatmenge, welche in einem separaten Vorratsbehälter eingesammelt wird. Die Viskosität der ursprünglichen Suspension liegt bei ca. 500 mPa.s. Mit fortschreitendem Auswaschen sinkt die Viskosität, und erreicht am Ende des Auswaschprozesses einen Wert von <50 mPa.s. Der Permeatdurchfluss erreicht am Schluss einen Wert von über 85 l/m²·Std., das Permeat ist klar und nur noch leicht rötlich verfärbt, die erhaltene Pigmentsuspension ist 6,5 %ig und das Pigment weist eine klare rote Farbe auf. Der pH-Wert dieser Pigmentsuspension liegt zwischen 7 und 8. Die Suspension lässt sich dann nach konventionellen Filtrationsmethoden einwandfrei abfiltrieren. Nach üblicher Isolierung wird ein Pigment erhalten, das nach Einarbeitung in Kunststoffe und Lacke ausgezeichnete Ausfärbungen bezüglich koloristischer und Pigment-Eigenschaften ergibt.

Beispiel 2: In eine Mikrofiltrationsapparatur, versehen mit keramischen Membranen in Form eines Moduls (Typ 1 P 19 der Firma CERAVER, Länge der Membran: 85 cm, Kanaldurchmesser: 4 mm) der Porengrösse 0,8 µm und einer aktiven Filterfläche von 0,2 m² , werden aus einem üblichen Vorratsbehälter kontinuierlich 5 Liter der gleichen, im Beispiel 1 angegebenen wässrig-alkalischen Synthese-Suspension eingefüllt. Bei einem Druck von 0,5 bar, einer Membran-Ueberströmgeschwindigkeit von 1,5 m/Sek. und einer Betriebstemperatur von 45°C wird die Suspension unter Konstanthaltung des Niveaus im Suspensionsbehälter mit 20 Litern Methanol ausgewaschen. Bei diesen Arbeitsbedingungen werden Durchflusswerte um 90 l/m²·Std. erzielt. Das hierbei austretende Permeat ist zunächst sehr dunkel verfärbt, wird dann aber mit fortschreitendem Auswaschen immer heller und ist am Ende der Behandlung fast wasserklar. Die erhaltene methanolische-Pigmentsuspension (enthaltend 343 g Pigment) hat seine ursprünglich bräunlich-schwarze Verfärbung verloren und ist ein leuchtendes rotes Produkt, das nach Abdampfen der Flüssigkeit unter reduziertem Druck und Einarbeitung in Kunststoffe oder Lacke ausgezeichnete Ausfärbungen hinsichtlich koloristischer und Pigment-Eigeneschaften ergibt.

Beispiel 3: C.I. Pigment Rot 144, das gemäss dem in der US-Patentschrift Nr. 2741658 angegebenen Verfahren hergestellt wurde und aus der Synthese als 6 %ige Pigmentsuspension in o-Dichlorbenzol (oDCB) vorliegt, wird zum Auswaschen und Ersatz des o-Dichlorbenzols durch Wasser wie folgt kontinuierlich aus einem Vorratshbehälter in eine Mikrofiltrationsapparatur eingepumpt:
Die Mikrofiltrationsapparatur ist mit einer Graphit/Zirkonoxid-Membran (Firma SFEC) bestückt, die eine Länge von 130 cm, einen Kanaldurchmesser von 6 mm, eine Filterfläche von 0,025 m² und einen Trennschnitt vom Molekulargewicht 5 000 000 aufweist. Der mittlere Betriebsdruck beträgt 2 bar, die Eindosierungsrate 1250 l/Stunde und die Arbeitstemperatur 30°C. Unter diesen Arbeitsbedingungen werden Permeatdurchflussleistungen von 155 l/m²·Std. erzielt.
Das Auswaschen der eingesetzten 5 Liter Pigmentsuspension erfolgt mit der fünffachen Menge an Waschlösung und zwar zunächst mit 10 Litern Isopropanol, dann mit einem Gemisch aus 0,7 Liter Isopropanol und 0,3 Liter Wasser, hierauf mit einem Gemisch aus 0,5 Liter Isopropanol und 0,5 Liter Wasser und schliesslich mit 13 Litern reinem Wasser, wobei die wegfliessende Permeatmenge durch eine volumenmässig gleiche Menge obiger Waschflüssigkeiten ersetzt wird. Nach dem dreifachen Auswaschen enthält die Lösungsmittelphase der Suspension noch 5 % oDCB und nach dem fünffachen Auswaschen noch 0,7 % oDCB; das Pigment ist praktisch in reinem Wasser suspendiert. Nach konventioneller Filtration und Trocknung dieser Suspension erhält man ein Pigment, das sich ausgezeichnet zum Einfärben von Kunststoffen und Lacken eignet.

Beispiel 4: Eine 5 Liter-Azocarbonsäurechloridsuspension (als Vorstufe zu C.I. Pigment Rot 220) liegt als 16 %ige Pigmentsuspension in o-Dichlorbenzol vor und wird aus einem Vorratsbehälter in eine Mikrofiltrationsapparatur geleitet und unter Konstanthaltung des Flüssigkeitsspiegels kontinuierlich mit 10 Litern o-Dichlorbenzol ausgewaschen. Die Mikrofiltrationsapparatur ist mit einer Membran (Länge 50 cm; Kanaldurchmesser 6 mm) aus Sintermetall (MOTT) der Porengrösse 0,2 µm und 0,01 m² aktiver Membranfläche bestückt. Bei einem Membrandruck von 2,5 bar, einer Eindosier-Geschwindigkeit von 1,5 m/Sek. und einer Arbeitstemperatur von 30°C werden Durchflussleistungen zwischen 85 und 125 l/m²·Std. erzielt. Das austretende Permeat ist rot verfärbt aber klar. Die auf diese Weise gereinigte Vorstufe zum C.I. Pigment Rot 220 führt nach deren Kondensation mit dem entsprechenden Diamin und Aufarbeitung zum C.I. Pigment Rot 220, welches in Kunststoffe und Lacke eingearbeitet ausgezeichnete Ausfärbungen hinsichtlich koloristischer und Pigmenteigenschaften ergibt.

Beispiel 5: 4,3 Liter einer 7%igen Pigment-Suspension in Methanol enthaltend C.I. Pigment Gelb 110 (Isoindolinon) (erhalten nach bekanntem Verfahren beispielsweise gemäss dem in Farbe und Lack 72, Nr. 3 (1966), S. 208, 1. Spalte, Zeilen 6 bis 12 von unten, angegebenen Verfahren durch Umsetzung von Tetrachlor-2-cyanbenzoesäuremethylester, einem Diamin und Natriummethylat in Methanol) werden in das Vorratsgefäss einer Mikrofiltrationsanlage eingefüllt. Die Mikrofiltrationsmembrane (Typ 1 P 19 der Firma Ceraver ) der Anlage besteht aus keramischem Material, ist 85 cm lang, hat einen Kanaldurchmesser von 4 mm und eine Porenweite von 0,8 µm bei einer Filterfläche von 0,2 m². Der Eingangsdruck an der Membrane beträgt 1,5 bar, der Ausgangsdruck 0,5 bar, und die Betriebstemperatur wird auf 40°C eingestellt. Die Pigmentsuspension wird zunächst mit 4,3 Litern Methanol, dann mit derselben Menge eines Methanol/Wassergemisches 1 zu 1 (Vol.-Teile) und schliesslich noch 4-mal mit je 4,3 Litern reinem Wasser ausgewaschen. Bei diesem Auswaschvorgang wird so vorgegangen, dass das ursprüngliche Volumen der Suspension (4,3 Liter) mit Hilfe der Mikrofiltration auf 2 Liter aufkonzentriert wird, hernach wird eine erste Portion Waschflüssigkeit zugefügt bis das ursprüngliche Volumen wieder erreicht ist, dann wird wieder auf 2 Liter aufkonzentriert und so fort bis sämtliche Waschflüssigkeit verbraucht ist. Bei diesem sägezahn-artigen Auswaschvorgang schwankt der Permeatfluss zwischen 4500 ml/Min. bei der grössten Verdünnung und 3600 ml/Min. bei der höchsten PigmentKonzentration, vorausgesetzt dass die Ueberströmgeschwindigkeit der Suspension über die Membrane mindestens 2 m/Sek. beträgt. Das derart ausgewaschene Pigment liegt als reine wässrige Suspension vor, welches nur noch Spuren von Methanol aufweist. Nach üblicher Isolierung und Trocknung wird ein Pigment erhalten, das nach Einarbeitung in Kunststoffe oder Lacke ausgezeichnete Ausfärbungen bezüglich koloristischer und Pigment-Eigenschaften ergibt.

Beispiel 6: Zwecks Reinigung und Ueberführung in eine wässrige Pigmentsuspension werden 5 kg einer Pigmentsuspension in o-Dichlorbenzol [80 g C.I. Pigment Gelb 109 (Isoindolinon) pro Liter o-Dichlorobenzol], welche nach bekanntem Verfahren beispielsweise gemäss dem in Farbe und Lack 72, Nr. 3 (1966), S 208, 1. Spalte, Zeilen 6 bis 12 von unten angegebenen Verfahren durch Umsetzung von Tetrachlorcyanbenzoesäuremethylester, einem Diamin und Natriummethylat in o-Dichlorbenzol hergestellt wurde, in den 10 Liter fassenden Konzentratsbehälter einer Mikrofiltrationsanlage gefüllt. Die Mikrofiltrationsanlage ist mit Membranen aus gesintertem Aluminiumoxid (Typ 1 P 19 der Firma Ceraver) versehen. Die Porenweite dieser Membranen (85 cm lang, 4 mm Kanaldurchmesser) beträgt 0,45 µm und die nutzbare Membranfläche 0,8 m². Die sich im Konzentrationsbehälter befindliche Suspension wird mit 5 Liter o-Dichlorbenzol verdünnt und dieses Gemisch so lange mikrofiltriert bis das ursprünglich eingefüllte Suspensionsvolumen wieder erreicht ist. Ohne indessen den Lauf der Mikrofiltration zu unterbrechen, werden nun 4-mal je 5 Liter Methanol zugefügt und die Suspension nach jeder Zugabe wiederum auf das ursprüngliche Volumen reduziert. Zweimal nacheinander mit 5 Litern eines Methanol/Wassergemisches in Verhältnis 1 zu 4 (Vol.-Teile) wird in der eben beschriebenen Weise nachgespült. Schliesslich wird das Methanol noch durch dreimaliges Auswaschen mit je 5 Litern Wasser verdrängt.

Für die Dauer der Auswaschung gelten die folgenden Laufdaten der Mikrofiltration:

| | |
|---|---|
| Eingangsdruck: | 1,2 bar; |
| Ausgangsdruck: | 0,8 bar; |
| Membran-Ueberströmgeschwindigkeit: | 2 m/Sek.; |
| Erzielte Permeatfluxwerte: | 200 bis 300 l/m². Std.; |
| Betriebstemperatur: | 35°C. |

Sind die Permeatabläufe der ersten drei Waschungen durch die zu entfernenden Verunreinigungen noch stark gelb verfärbt, so werden diese Abläufe mit zunehmender Auswaschung heller, um schliesslich nach dem letzten Waschdurchgang vollständig farblos und wasserklar abzulaufen. Das derart gereinigte Produkt liegt nun als wässrige gelbe Pigment-Suspension vor, die weniger als 0,1 % o-Dichlorbenzol enthält.

Nach üblicher Isolierung und Trocknung wird ein Pigment erhalten, das nach Einarbeitung in Kunststoffe oder Lacke ausgezeichnete Ausfärbungen bezüglich koloristischer und Pigment-Eigenschaften ergibt.

## Patentansprüche

1. Trenn- und Reinigungsverfahren für Pigmentsuspensionen und Pigmentzwischenproduktsuspensionen in einer Flüssigkeit mit Hilfe der Membrantechnik, wobei die Suspension gleichmässig und im Kreislauf in eine mindestens eine semipermeable Membran aufweisende Mikrofiltrationseinrichtung eindosiert und die Flüssigkeit durch die Membran als Permeat ausgeschieden werden, dadurch, gekennzeichnet, dass man die wegfliessende Permeatmenge allmählich in der Weise durch eine von der ersten Flüssigkeit verschiedene Waschflüssigkeit ersetzt, dass die Gesamtmenge der zudosierten Waschflüssigkeit das 1- bis 15-Fache des Gesamtvolumens der Anfangssuspension beträgt, und dass man anschliessend die so erhaltene Suspension mit Hilfe konventioneller Filtrations- oder Trockeneinrichtungen von der Flüssigkeit abtrennt.

2. Verfahren gemäss Anspruch 1, dadurch gekennzeichnet, dass die Mikrofiltrationseinrichtung ein Einrohr- oder Mehrrohrfiltermodul ist, das eine mikroporöse Membran enthält.

3. Verfahren gemäss Anspruch 1, dadurch gekennzeichnet, dass die Mikrofiltrationseinrichtung ein Mehrrohrfiltermodul ist.

4. Verfahren gemäss Anspruch 1, dadurch gekennzeichnet, dass die Membran aus anorganischen Stoffen besteht.

5. Verfahren gemäss Anspruch 4, dadurch gekennzeichnet, dass die Membran aus poröser Keramik, gesinterten Metallen, porösem Graphit oder porösem Graphit mit Zirkonoxid- oder Aluminiumoxid-Beschichtung besteht.

6. Verfahren gemäss Anspruch 1, dadurch gekennzeichnet, dass die einzudosierende Menge der Waschflüssigkeit volumenmässig annähernd gleich ist wie die wegfliessende Permeatmenge und das 1- bis 5-Fache des Gesamtvolumens der Anfangssuspension beträgt.

7. Verfahren gemäss Anspruch 1, dadurch gekennzeichnet, dass die Porengrösse der Membrane 0,1 bis 5 Mikron beträgt.

8. Verfahren gemäss Anspruch 1, dadurch gekennzeichnet, dass die Durchflussleistung der Mikrofiltrationseinrichtung 45 bis 450 Liter Suspension pro Stunde und m² beträgt.

9. Verfahren gemäss Anspruch 1, dadurch gekennzeichnet, dass feine, bei der Herstellung von Azo-, Azomethin-, Iminoisoindolinon-, Iminoisoindolin-, Pyrrolopyrrol- und Metallkomplexpigmenten ausfallende Pigmentsuspensionen sowie deren Zwischenprodukte in Chlorbenzol, o-Dichlorbnezol, Nitrobenzol, Toluol, Xylolen oder in Alkoholen verwendet werden.

## Claims

1. A process for separating and purifying pigment suspensions and suspensions of pigment intermediates in a liquid by means of membrane technology, where the suspension is uniformly fed to and circulated through a microfiltration unit containing at least one semi-permeable membrane and the separated liquid flows off through the membrane as permeate, which process comprises replacing the permeate flowing off gradually by a washing liquid that differs from the first liquid such that the total amount of washing liquid fed into the system is 1 to 15 times the total volume of the initial suspension, and then separating the resultant suspension from the liquid by means of conventional filtration or drying apparatus.

2. A process according to claim 1, wherein the microfiltration unit is a single-tube or multi-tube filter module which contains a microporous membrane.

3. A process according to claim 1, wherein the microfiltration unit is a multi-tube filter module.

4. A process according to claim 1, wherein the membrane is made from inorganic materials.

5. A process according to claim 4, wherein the membrane consists of porous ceramic, sintered metals, porous graphite or porous graphite coated with zirconium oxide or aluminium oxide.

6. A process according to claim 1, wherein the volume of washing liquid to be added to the permeate is approximately equal to the volume of the permeate that flows off and is 1 to 5 times the total volume of the initial suspension.

7. A process according to claim 1, wherein the pore size of the membrane is 0.1 to 5 microns.

8. A process according to claim 1, wherein the rate of flow of the suspension through the microfiltration unit is 45 to 450 litres per hour and m².

9. A process according to claim 1, wherein fine pigment suspensions resulting from the preparation of azo, azomethine, iminoisoindolinone, iminoisoindoline, pyrrolopyrrole and metal complex pigments, as well as their intermediates, in chlorobenzene, o-dichlorobenzene, nitrobenzene, toluene, xylenes or in an alcohol are used.

## Revendications

1. Procédé de séparation et de purification pour suspensions pigmentaires et suspensions de produits pigmentaires intermédiaires, dans un liquide, à l'aide de la technique membranaire, la suspension étant introduite progressivement, à rythme régulier et dans le circuit, d'une installation de microfiltration présentant au moins une membrane semi-perméable et le liquide étant éliminé à travers la membrane en tant que perméat, caractérisé en ce qu'on remplace, progressivement la quantité de perméat s'écoulant par un liquide de lavage différent du premier liquide, de façon à ce que la quantité totale du liquide de lavage ajoutée progressivement représente 1 à 15 fois le volume total de la suspension de départ, et ensuite, on sépare la suspension ainsi obtenue, à l'aide de dispositifs de filtration et de séchage conventionnels, d'avec le liquide.

2. Procédé selon la revendication 1, caractérisé en ce que l'installation de microfiltration est un module de filtration à un ou plusieurs tubes, qui contient une membrane microporeuse.

3. Procédé selon la revendication 1, caractérisé en ce que l'installation de microfiltration est un module de filtration à plusieurs tubes.

4. Procédé selon la revendication 1, caractérisé en ce que la membrane est composée de matières minérales.

5. Procédé selon la revendication 4, caractérisé en ce que la membrane est en céramique poreuse, en métaux frittés, en graphite poreux ou en graphite poreux revêtu d'oxyde de zirconium ou d'oxyde d'aluminium.

6. Procédé selon la revendication 1, caractérisé en ce que la quantité de liquide de lavage à ajouter progressivement est approximativement identique en volume à la quantité de perméat s'écoutant et qu'elle représente 1 à 5 fois le volume total de la suspension de départ.

7. Procédé selon la revendication 1, caractérisé en ce que la taille de pores de la membrane est de 0,1 à 5 microns.

8. Procédé selon la revendication 1, caractérisé en ce que le débit de l'installation de microfiltration est de 45 à 450 litres de suspension par heure et m².

9. Procédé selon la revendication 1, caractérisé en ce qu'on utilise des suspensions pigmentaires fines ainsi que leurs produits intermédiaires, qui se forment au cours de la préparation des pigments azoïques, d'azométhine, d'iminoisoindolinone, d'iminoisoindoline, de pyrrolopyrrole et de complexes métalliques, dans le chlorobenzène, l'o-dichlorobenzène, le nitrobenzène, le toluène, les xylènes ou alcools.
